# EUROPEAN PATENT APPLICATION

(11) **EP 1 755 029 A1**
(43) Date of publication of application: **21.02.2007**
(21) Application number: 05741063.1
(22) Date of filing: 18.05.2005
(51) Int. Cl.: G06F 3/12, B41J 29/00

(54) **PRINTING PROCESS CONTROL METHOD AND SHORT DISTANCE WIRELESS COMMUNICATION TERMINAL APPARATUS**

(30) Priority: 18.05.2004 JP 2004147827; 18.05.2004 JP 2004147828; 17.05.2005 JP 2005144247
(71) Applicant: SEIKO EPSON CORPORATION, Shinjuku-ku, Tokyo 163-0811 (JP)
(72) Inventor: KURATA, Kenichi, SEIKO EPSON CORPORATION, Suwa-shi, Nagano 3928502 (JP)
(74) Representative: Cloughley, Peter Andrew
(86) International application number: PCT/JP2005/009028
(87) International publication number: WO 2005/111774

(57) **Abstract**

A printing process control method for use in a terminal apparatus having storing means for storing image data to be printed and control means for performing a short distance wireless communication with a printing apparatus, wherein the control means acquires, from the printing apparatus, information related to the attributes of the printing apparatus and determines, based on the acquired attribute information, whether the printing apparatus complies with a predetermined expanded specification; if so determining, the control means transmits data, which has been obtained by processing, based on the predetermined expanded specification, the image data to be printed, in a predetermined file format to the printing apparatus; and otherwise, the control means transmits, in a predetermined file format, data for determining the image data to be printed to the printing apparatus. This allows a printing process to be performed in accordance with the printer specification.

## Description

### Technical Field

The present invention relates to a printing system using a short distance wireless communication technique, and more particularly, it relates to a printing system which performs printing process according to a language that is able to be interpreted by a printer.

### Background Art

In recent years, a network which uses a short distance wireless communication technique has come into practical use. Even in a printing system where a printer host apparatus such as a personal computer, and a printer being a printing apparatus are connected by cable, conventionally, it is now possible to perform printing by transmitting print data from a wireless terminal apparatus (hereinafter, referred to as "terminal apparatus") to a printer by the short distance wireless communication.

A representative example of the short distance wireless communication interface is Bluetooth (Bluetooth: Trademark) which uses radio frequency of 2.45 GHz-band. For example, various communication technologies using Bluetooth have been suggested as shown in the Patent Document 1.

In the printing system which performs wireless communication using Bluetooth, so-called push-based printing process and pull-based printing process are performed. In the push-based printing process, the terminal apparatus embeds image data to be printed in a file which is described in a markup language such as XHTML (Extensible Hypertext Markup Language), and transmits the file to a printer, and the printer executes printing according to the file. In the pull-based printing, the terminal apparatus transmits to the printer a file name of the image data to be printed, and the printer captures the image data from the terminal apparatus and executes printing.

In the push-based printing process, the terminal apparatus functions as a client to transmit the image data to the printer, and thus processing load on the terminal apparatus is lighter than the pull-based printing process. Therefore, the push-based printing process is suitable for a portable type terminal apparatus such as cellular phone.

It is to be noted that when printing is performed via the wireless communication using Bluetooth between the terminal apparatus and the printer, the terminal apparatus issues a search request for devices in the surrounding area, selects printers from the devices which have responded to the request, and presents a list of available printers. Then, a user transmits the print data to the selectedprinter, and printing is executed.

Patent Document 1: Japanese Patent Laid-open Publication No. 2002-373130

### Summary of the Invention

### Problem to be solved by the Invention

In the push-based printing process, it is necessary to embed image data in the file of XHTML format or the like, but the XHTML format file is a text file in principle. Therefore, in order to embed the image data, encoding of the image data by use of MIME (Multipurpose Internet Mail Extension) is unavoidable, which is an expanded specification of the Internet.

Therefore, it is necessary to support the MIME also on the printer side, so that the image data is decoded on the printer.

If all of the printers available for communication using Bluetooth support the MIME, the terminal apparatus is only required to perform push-based printing process which is less burdensome in processing. In practice, however, there exists a printer that does not support the MIME, even if it is capable of performing communication by use of Bluetooth. Therefore, in order to expand the versatility in printing process by the terminal apparatus, it is desirable that printing process is performed according to the specification of each printer.

The first object of the present invention is to provide a printing process control method and a short distance wireless communication terminal apparatus which allow a printing process according to the specification of the printer.

In the meantime, as for the Bluetooth, there is defined a specification regarding procedures, in which a search request is issued for devices and information as to printers having responded to the request is obtained from the printers. However, it is not specified as to a procedure for presenting a user a list of printers which are available for printing. Therefore, the contents of the list of printers being displayed are left up to a design by the developer. However, usability and the like are not considered, and the user is prompted to select from the list of the printers, which are listed in the order of time when the printer made a response.

Printing process in the terminal apparatus is controlled according to a print control program. Since the specification of the printer is varied depending on a manufacturer, a model, and the like, each printer may be good or bad in compatibility with the print control program.

Printing by a printer being compatible with the print control program may optimize the use of performance in the print control program and the printer. Therefore, it is desirable to select a printer as compatible as possible.

On the other hand, viewing from the user side, it is also convenient for the user if he or she is allowed to designate a printer easily, which is compatible with the printer control program.

The second object of the present invention is directed to a print system using the short distance wireless communication, wherein usability is enhanced in selecting a printer.

### Means for Solving the Problem

In order to solve the problems above, a printing process control method according to the present invention is provided in a terminal apparatus having a storing means which stores image data to be printed and a control means which performs short distance wireless communication with a printing apparatus, wherein,
the control means obtains from the printing apparatus, information regarding an attribute of the apparatus,
the control means determines whether or not the printing apparatus supports a predetermined expanded specification based on the attribute information thus obtained,
when it is determined that the printing apparatus supports the predetermined expanded specification, data obtained by processing the data to be printed according to the predetermined expanded specification is transmitted to the printing apparatus in a predetermined file format, and when it is determined that the printing apparatus does not support the predetermined expanded specification, data for identifying the image data to be printed is transmitted to the printing apparatus in a predetermined file format.

In the printing process control method according to the present invention, it is determined whether or not the printing apparatus supports the predetermined expanded specification according to the information obtained from the printing apparatus, and the printing process method is changed based on the result of the determination. Therefore, it is possible to perform a printing process suitable for a printer specification, thereby achieving the first object of the present invention.

In addition, in order to solve the above problems, a short distance wireless communication terminal apparatus according to the present invention is a terminal apparatus which performs short distance wireless communication with a printing apparatus, including,
a storing means which stores image data to be printed,
an attribute information obtaining means which obtains from the printing apparatus, information regarding an attribute of the apparatus,
a determining means which determines whether or not the printing apparatus supports a predetermined expanded specification, based on the attribute information, and
a transmission control means in which when it is determined that the printing apparatus supports the predetermined expanded specification, data obtained by processing the data to be printed according to the predetermined expanded specification is transmitted to the printing apparatus in a predetermined file format, and when it is determined that the printing apparatus does not support the predetermined expanded specification, data for identifying the image data to be printed is transmitted to the printing apparatus in a predetermined file format.

The short distance wireless communication terminal apparatus according to the present invention determines whether or not the printing apparatus supports the predetermined expanded specification according to the information obtained from the printing apparatus, and the printing process method is changed based on the result of the determination, whereby, printing process according to a printer specification can be performed. Therefore, it is possible to achieve the first object of the present invention.

In order to solve the above problems, a terminal apparatus according to the present invention is a terminal apparatus which performs short distance wireless communication with printing apparatuses, including,
a list displaying means which displays a list of printing apparatuses available for communication, and accepts a selection of the printing apparatus which is used for printing,
a search requesting means which issues a request for searching devices,
a printing apparatus extraction means which extracts a printing apparatus from devices responding to the search request,
a printing apparatus information request means which requests information regarding the printing apparatus from the printing apparatus thus extracted,
a determining means which determines whether or not information in response to the printing apparatus information request satisfies a predetermined condition, and
a printing apparatus registering means in which when it is determined the condition is satisfied, information for identifying the printing apparatus is registered in a higher order of the list, and when it is determined the condition is not satisfied, the information for identifying the printing apparatus is registered in a lower order of the list.

Accordingly, the second object can be achieved.

Here, the determining means is capable of determining, as the predetermined condition, whether or not a manufacturer of the printing apparatus included in the response information to the printing apparatus information request is a predetermined manufacturer.

Furthermore, the predetermined manufacturer may be identical to the developer of a program for controlling the printing process in the terminal apparatus.

### Brief Description of Drawings

[FIG. 1] FIG. 1 is a block diagram showing a configuration of a short distance wireless communication printing system according to the first embodiment.
[FIG. 2] FIG. 2 is a flow diagram explaining a processing when printing of image data is performed.
[FIG. 3] FIG. 3 is a flow diagram explaining push-based printing process.
[FIG. 4] FIG. 4 is a flow diagram explaining pull-based printing process.
[FIG. 5] FIG. 5 is a block diagram showing a configuration of the short distance wireless communication printing system according to the second embodiment.
[FIG. 6] FIG. 6 is a flow diagram explaining a process when the terminal apparatus performs printing.
[FIG. 7] FIG. 7 is an illustration showing an example of a printer list that is displayed on the terminal apparatus.
[FIG. 8] FIG. 8 is an illustration showing an example of data in which the order of priority is decided with respect to each printer model.
[FIG. 9] FIG. 9 is an illustration showing an example of the printer list that is displayed on the terminal apparatus.
[FIG. 10] FIG. 10 is an illustration showing an example of the printer list that is displayed on the terminal apparatus.

### Descriptions of the Marks

- 1: TERMINAL APPARATUS
- 2: CPU
- 3: RAM
- 4: I/F
- 5: AUXILIARY STORING PART
- 6: DISPLAY PART
- 7: ROM
- 10: PRINTER
- 11: CPU
- 12: RAM
- 13: I/F
- 14: OPERATING PANEL
- 15: PRINT ENGINE
- 16: ROM

### Best Mode for Carrying out the Invention

Preferred embodiments of the present invention will be explained with reference to the accompanying drawings.

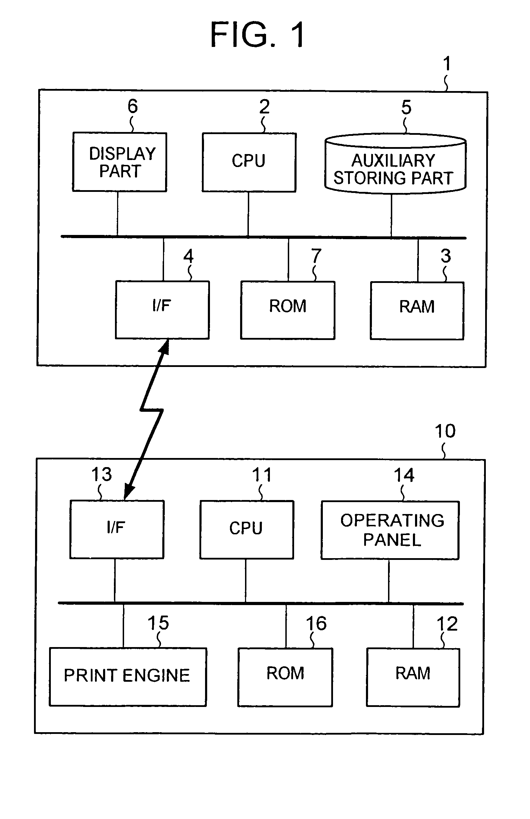

Firstly, the first embodiment will be explained. FIG. 1 is a block diagram showing a configuration of the short distance wireless communication printing system according to the first embodiment of the present invention. As illustrated, the printing system is provided with a terminal apparatus 1 and a printer 10 as a printing device. Short distance wireless communication is performed between the terminal apparatus 1 and the printer 10, and print data and the like are transmitted and received.

In the present embodiment, it is assumed that the short distance wireless communication performed between the terminal apparatus 1 and the printer 10 uses Bluetooth. However, the short distance wireless communication interface between the terminal apparatus 1 and the printer 10 is not limited to Bluetooth.

The printer 10 receives a file in XHTML format from the terminal apparatus 1 via the Bluetooth communication, and executes printing. Some specification types of the printer 10 are capable of interpreting MIME as an expanded specification of the Internet, and some are not. In this example here, since the file in XHTML format is basically a text file, its file name should be specified by use of IMG tag, in order to refer to image data. On the other hand, according to the MIME specification, it is possible to directly embed the image data being encoded in the XHTML format file.

In other words, when the printer 10 is capable of interpreting the MIME specification, the terminal apparatus 1 performs push-based printing process by generating a XHTML format file in which the image to be printed is embedded and transmitting the file to the printer 10. When the printer 10 is incapable of interpreting the MIME specification, the terminal apparatus 1 performs pull-based printing process by generating an XHTML format file which specifies the image data file to be printed and transmitting the file to the printer 10. It is possible to determine whether or not the printer 10 is capable of interpreting the MIME specification, based on attribute information of the device, which is obtained in the process when the terminal apparatus 1 establishes communication with the printer 10.

As shown in FIG. 1, the terminal apparatus 1 is provided with CPU 2, RAM 3, interface (I/F) 4, auxiliary storing part 5, display part 6, and ROM 7.

The CPU 2 connects, via a bus, each of the RAM 3, I/F 4, auxiliary storing part 5, display part 6, and ROM 7, and executes various processes according to a program and the like stored in the ROM 7. Furthermore, the CPU 2 performs processing such as interpreting a command in Bluetooth that is inputted from the outside via the I/F 4, reading out data from the auxiliary storing part 5, and controlling the I/F 4 in order to output a response to the command from the I/F 4 towards the outside.

In addition, according to the specification of the printer 10, the CPU 2 generates an XHTML format file including the image data to be printed or an XHTML format file specifying the image data file to be printed, and allows the printer 10 to execute printing.

The RAM 3 is utilized as a working memory or the like of the CPU 2.

The I/F 4 functions as an interface with external equipment such as the printer 10. The I/F 4 is controlled by the CPU 2 to generate a command compliant with the standard of Bluetooth, and outputs the command to the external equipment. At the same time, the I/F 4 inputs a command compliant with the standard of Bluetooth outputted from the external equipment, and outputs to the CPU 2, data regarding the contents of the command, data accompanying the command, and the like.

It is also possible to provide CPU, ROM, RAM, and the like within the I/F 4, and according to the control command from the CPU 2, the subsequent Bluetooth command generation and outputting, interpretation of the contents inputted from the outside, and the like may be performed therein.

Auxiliary storing part 5 stores the image data and the like to be printed by the printer 10. The image data and the like are stored in the auxiliary storing part 5 as a file in a predetermined image format such as JPEG. A file is specified by a file name, and according to the control by the CPU 2, the file is read out and outputted to the external equipment such as printer 10 via the I/F 4. The auxiliary storing part 5 may be structured by use of a nonvolatile storage such as hard disk device and flash memory.

The display part 6 displays in a menu format, information and the like necessary for operating the terminal apparatus, and displays an image to be printed. The display part 6 may be structured by use of liquid crystal display unit or the like.

The ROM 7 stores various programs and the like in a nonvolatile manner, which are executed by the CPU 2. Such various programs may include, for example, operating system which controls the terminal apparatus 1, Bluetooth control program to perform communication using Bluetooth, an application program to handle the image data to be printed, and the like.

In addition, the terminal apparatus 1 may be structured, for example, by use of a portable terminal apparatus such as a portable telephone. It is a matter of course that another kind of information processor such as personal computer may be employed.

As illustrated in FIG. 1, the printer 10 is provided with CPU 11, RAM 12, I/F 13, operating panel 14, print engine 15, and ROM 16.

The CPU 11 connects, via a bus, each of the RAM 12, I/F 13, operating panel 14, print engine 15, ROM 16. The CPU 11 executes various processes according to the programs and the like stored in the ROM 16, and performs processing to control the I/F 13, operating panel 14, print engine 15, and the like. In addition, the CPU 11 interprets a Bluetooth command inputted from the outside via the I/F 13, controls the print engine 15, and also controls the I/F 13.

The RAM 12 is utilized as a working memory and the like of the CPU 11.

The I/F 13 is an interface with external equipment that is connected wirelessly by Bluetooth. The I/F 13 is controlled by the CPU 11 to generate a command compliant with the standard of Bluetooth, and outputs the command to the external equipment. At the same time, the I/F 13 inputs a command compliant with the standard of Bluetooth outputted from the external equipment, and outputs to the CPU 11, data regarding the contents of the command, data accompanying the command, and the like.

In addition, it is also possible to provide CPU, ROM, RAM, and the like within the I/F 13, and according to the control command from the CPU 11, the subsequent Bluetooth command generation and outputting, interpretation of the contents inputted from the outside, and the like may be performed therein.

The operating panel 14 displays a status of the printer 10, and accepts settings and the like regarding the printing process on the printer 10. The operating panel 14 may be structured by use of a liquid crystal display unit, input button, and the like.

The print engine 15 is a mechanism to actually perform printing, and it is provided with a paper feed/discharge mechanism, printing mechanism, and the like. A printing method of the print engine 15 may be configured as ink jet printing, for example. The print engine for the ink jet printing is provided with multiple ink cartridges each filled with ink within a case, and printing is performed by spraying this ink from the recording head onto a print medium such as recording paper or the like. It is to be noted here that the printing method of the print engine 15 is not limited to the ink jet printing, and laser printing by use of toner is also applicable.

The image data as a print target, which is inputted from the I/F 13, is stored in the RAM 12. Then, according to the control by the CPU 11, the image data is outputted to the print engine 15 and the printing process is performed.

Various programs and the like which are executed by the CPU 11 are stored in the ROM 16 in a nonvolatile manner.

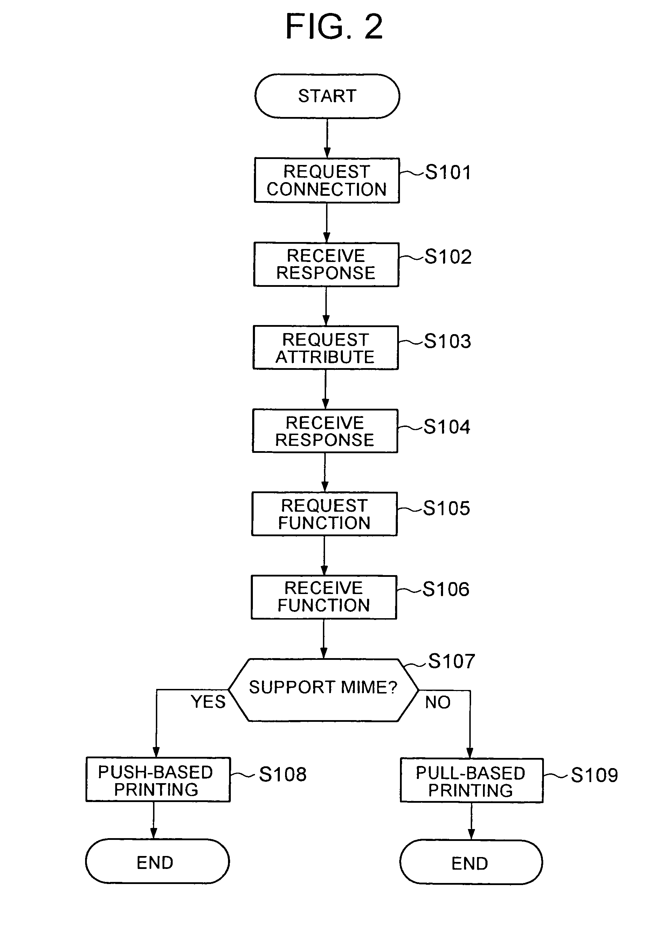

Next, with reference to FIG. 2, a processing will be explained, in which the terminal apparatus 1 performs communication using Bluetooth with the printer 10 and executes printing the image data that is stored in the auxiliary storing part 5.

Firstly, the terminal apparatus 1 issues a connection request to the printer 10 (S101). This connection request is performed by outputting an Inquiry command.

When the terminal apparatus 1 receives from the printer 10 a response command to this inquiry command (S102), the terminal apparatus 1 issues an attribute request to the printer 10 (S103). The attribute request is performed by outputting an SDP (Service Discovery Profile) command inquiring who is the communication counterpart, what kind of profile is available for the communication, what kind of language can be interpreted, and the like (S103).

Then, the printer 10 makes a response (Response command) to the SDP command. This response includes BPP (Basic Printing Profile) as information regarding the printer, indicating, for example, that the responding device itself is a printer, a printer name, model number, and the like. It also includes information regarding which profile of Bluetooth enables the communication. In addition, as additional information, if the printer 10 is capable of interpreting MIME specification, that information is also included.

When the response to the SDP command is received from the printer 10 (S104), the terminal apparatus 1 requests information from the printer 10 regarding the functions provided in the printer 10 (S105). The information regarding the functions may include, for example, available paper size and paper type, settable print mode, borderless print availability, and the like.

Then, the terminal apparatus 1 receives information regarding the functions transmitted from the printer 10 (S106). However, some types of the printer 10 may not support the request for the information regarding the functions. Therefore, if there is no response from the printer 10, the terminal apparatus 1 performs the subsequent processing without obtaining the information regarding the functions.

The terminal apparatus 1 determines whether or not the printer 10 is capable of interpreting MIME specification based on the contents of the response to the SDP command, which has been received in S104 (S107). It is to be noted that, in addition to the above processing, another processing may be performed, such as a processing when responses are received from multiple devices, and a processing for the communication and the like to set a channel to be used. However, explanation regarding such processing is omitted here.

Consequently, when it is determined that the printer 10 is capable of interpreting the MIME specification (S107: Y), push-based printing process is performed (S108). On the other hand, if it is determined that the printer 10 is incapable interpreting the MIME specification (S107: N), pull-based printing process is performed (S109).

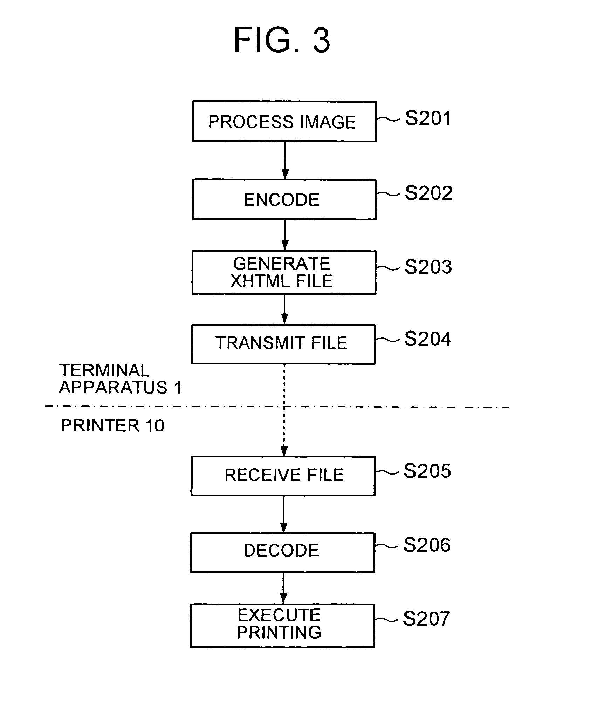

Here, the push-based printing process will be explained with reference to the flow diagram as shown in FIG. 3.

Firstly, the terminal apparatus 1 performs image processing as appropriate, as to the image data to be printed (S201). Here, the appropriate image processing may include, for example, synthesizing frames, correcting a color, converting resolution, and the like.

When the image processing is performed as appropriate, the terminal apparatus 1 encodes the image data having been subjected to the image processing, according to the MIME specification (S202). At the same time, the terminal apparatus 1 generates a file in XHTML format which requests the printer 10 to perform printing, and embeds the image data having been encoded according to the MIME specification into this file (S203). It is to be noted that the file being generated is not limited to XHTML format, but it may be HTML (Hypertext Markup Language), XML (Extensible Markup Language), SGML (Standard Generalized Markup Language), or the like.

Then, the terminal apparatus transmits this print request file in XHTML format to the printer 10 (S204).

When the printer 10 receives the print request file (S205), it decodes the image data embedded in the XHTML file, in accordance with the MIME specification (S206). Then, the printer 10 executes printing according to the image data (S207).

In other words, in the push-based printing process, the terminal apparatus 1 functions as a client and transmits to the printer 10 a set of image data to be printed as a single unit. Therefore, once the file is outputted to the printer, the terminal apparatus is released from the printing process.

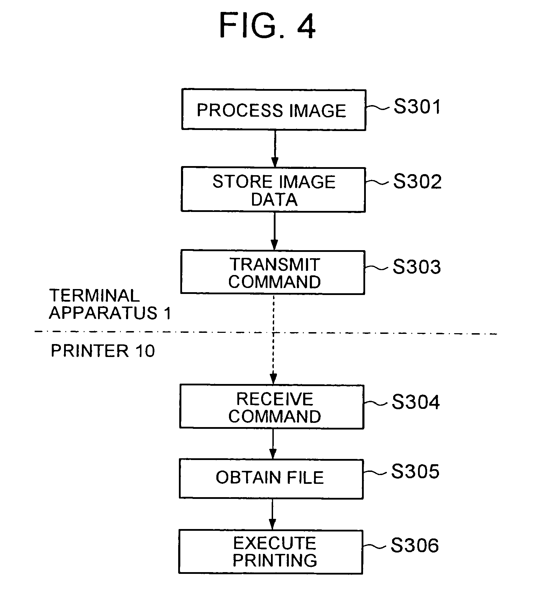

Next, the pull-based printing process will be explained with reference to the flow diagram as shown in FIG. 4.

Firstly, the terminal apparatus 1 performs image processing as appropriate as to the image data to be printed (S301). Here, the appropriate image processing may include, for example, synthesizing frames, correcting a color, converting resolution, and the like.

After the image processing is performed as appropriate, the terminal apparatus 1 adds a file name to the image data having been subjected to the image processing, and stores the image data in the auxiliary storing part 5 (S302).

Then, the terminal apparatus 1 transmits to the printer 10, a command (Data Send) including XHTML data specifying the file name of the image data by use of IMG tag (S303). It is to be noted here that the data format included in the command is not limited to XHTML format.

When the printer 10 receives the Data Send command (S304), the printer 10 obtains from the terminal apparatus 1, a file of the image data indicated by the IMG tag in the XHTML data that is included in the Data Send command (S305).

This processing for obtaining the file of the image data is carried out by a request from the printer 10. Specifically, after the communication to set a channel to be used for file receiving is performed, a command for obtaining the image (Request Image Data) is transmitted to the terminal apparatus 1, and the image data is captured.

Then, the printer 10 executes printing according to the image data thus obtained (S306).

In other words, in the pull-based printing process, the printer 10 functions as a client and the printer 10 takes the initiative in capturing the image data from the terminal apparatus 1. Therefore, it is necessary for the terminal apparatus 1 to maintain a communication status until it receives from the printer 10 a notice that the capturing process has completed.

In any of the printing processes, push-based printing process and pull-based printing process, the terminal apparatus 1 accepts print settings from a user, prior to the printing process. At this timing, the terminal apparatus 1 displays on the display unit 6, a user interface screen for accepting the print settings.

In general, since the display part 6 of the terminal apparatus 1 has a narrow display area, it is not easy to offer a user interface showing sufficient information. Therefore, it is also possible to change the contents to be displayed on the user interface screen, based on the information regarding the functions of the printer 10 that is obtained in the above processing (S106).

For example, in the settings regarding the print paper, a paper size and a paper type available for the printer 10 may be displayed as a choice of options, or a setting item as to borderless printing may be displayed only in the case where the borderless printing is available. Accordingly, operability in accepting print settings can be enhanced.

As described above, according to the present invention, it is possible to achieve a short distance wireless communication terminal which is capable of performing printing process in accordance with the specification of the printer.

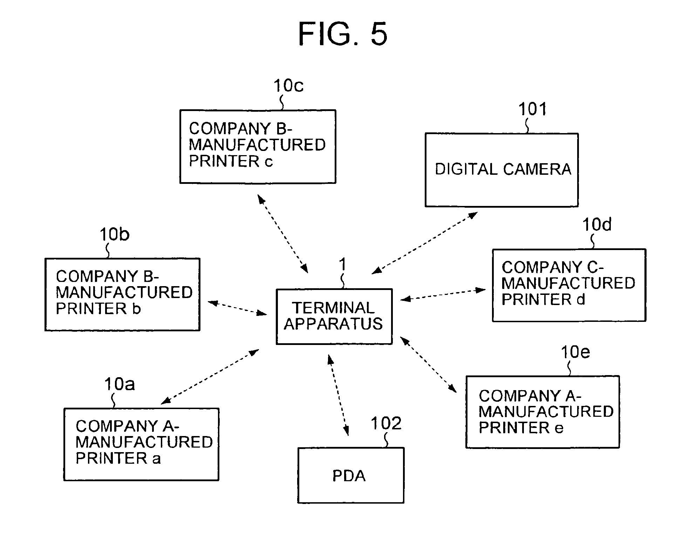

Next, the second embodiment of the present invention will be explained. FIG. 5 is a block diagram showing an example of the configuration of a short distance wireless communication system of the second embodiment. As shown in this figure, the short distance wireless communication system is provided with terminal apparatus 1 and multiple peripheral devices.

The peripheral devices may include, for example, printers 10, digital camera 101, and PDA (Personal Digital Assistant) 102. With regard to the printers 10, it is assumed that multiple printers 10a to 10e exist.

It is also assumed that the multiple printers 10 are produced by various manufacturers, and each printer is different in model. Here, it is assumed that the printer 10a is "printer *a* manufactured by company *A",* the printer 10b is "printer b manufactured by company *B",* the printer 10*c* is "printer *c* manufactured by company *B",* the printer 10d is "printer d manufactured by company *C",* and the printer 10e is "printer *e* manufactured by company *A".*

The terminal apparatus 1 performs short distance wireless communication with the multiple peripheral devices. In the present embodiment, it is assumed that the short distance wireless communication performed between the terminal apparatus 1 and the peripheral devices uses Bluetooth. However, it is to be noted that the short distance wireless communication interface between the terminal apparatus 1 and the peripheral devices is not limited to the Bluetooth.

The hardware configuration of the terminal apparatus 1 and the printer 10 may be the same as those of the first embodiment, as shown in the block diagram in FIG. 1.

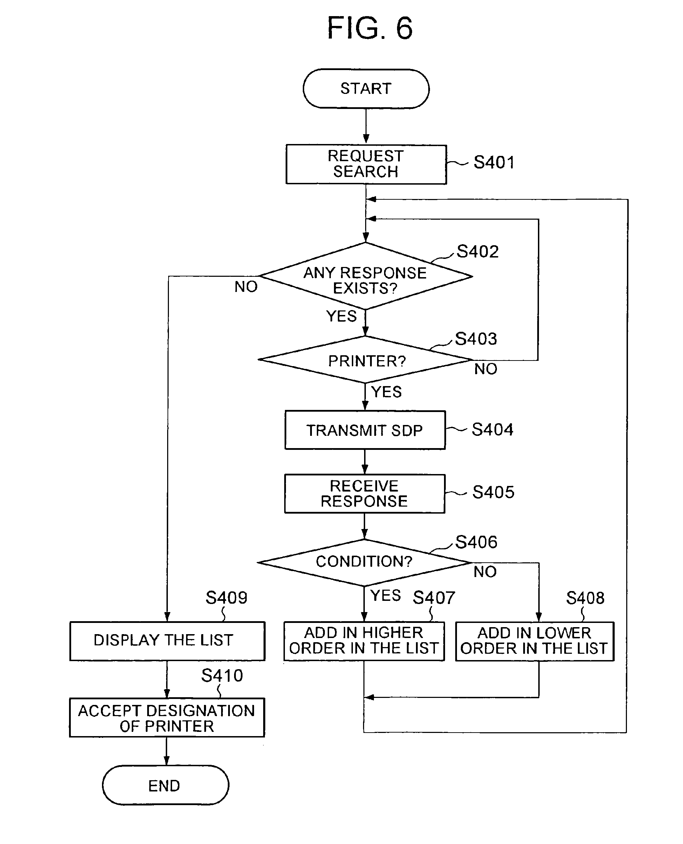

Next, with reference to the flow diagram as shown in FIG. 6, a process will be explained in which the terminal apparatus 1 performs printing from any one of the printers 10. Specifically, this process is to search for the printers 10 available for communication, and display a list of the printers 10 having been searched out, in order to allow a user to select a printer to be used for printing. Executing the print control program by the CPU 2 mainly controls the above processing.

Firstly, the terminal apparatus 1 transmits a device search request (S401). When a Bluetooth device within a communication range of the terminal apparatus 1 receives this search request, the Bluetooth device transmits a connection response to the terminal apparatus 1.

In receipt of the connection response from any Bluetooth device (S402: Y), the terminal apparatus 1 checks CoD (Class of Device) included in the connection response and determines whether or not the device that has transmitted the response is a printer (S403). Since the print control program is an application to perform printing by controlling the printers 10, a Bluetooth device, other than the printers 10 as a control target, has to be excluded from the list to be generated.

As a result, if it is determined that the device is not a printer (S403: N), the terminal apparatus waits for a connection response from another Bluetooth devices.

On the other hand, if it is determined as a printer (S403: Y), the terminal apparatus transmits an SDP search request to the device, so as to check the attribute of the device (S404).

Then, a response from the device is received (S405). This response includes a profile that is usable by the printer, printer manufacturer, printer model, and other information regarding the printer. It is to be noted that the processing from the device search request up to this stage is carried out according to the specification of Bluetooth.

The terminal apparatus 1 compares the contents of the response and a predetermined condition, and determines whether or not the printer 10 satisfies the condition (S406).

This condition may be defined such that the printer is to be the one produced by a predetermined manufacturer. If the printer 10 which performs printing is compatible with the program which controls the printing process, it is expected that a preferable print result can be obtained. For example, if the manufacturer of the printer is the same as the developer of the printing process program, or strongly related thereto, the compatibility between the program and the printer is assumed to be good.

Therefore, in the present embodiment, the condition requires that the printer is produced by a predetermined manufacturer, specifically, the same manufacturer as the developer of the printing process program, or alternatively, it is produced by a manufacturer being strongly related to the developer.

It is a matter of course that the condition determined in the process (S406) is not limited to that the printer is produced by a predetermined manufacturer. For example, the condition may include that the printer is a predetermined model, it is provided with a predetermined function, or the like.

If the printer which has made the response is not provided with BPP (Basic Printing Profile) as a profile for printing using Bluetooth, it is possible to configure such that the printer is not added to the list, before comparing the conditions. Moreover, some of the conditions employed in the process (S406) may enable a determination by the information of Cod that is included in the connection response. In this case, instead of the response to the SDP search request, the determination of the condition is made by the information of CoD included in the connection response.

As a result of determination whether the condition is satisfied in the process (S406), if it is determined that the condition is satisfied, the printer 10 is registered on the top of the list being displayed (S407). This is registered as such to display the printer 10 on the top of the list, in order that the user is allowed to select more easily the printer 10 satisfying the condition. It is to be noted that the information registered in the list may include, for example, a manufacturer name of the printer 10 and a model name thereof, and the like. Further, if the printer 10 has an identifier, this identifier information may be registered.

On the other hand, if it is determined that the condition is not satisfied, the printer 10 is registered at the bottom of the list being displayed (S408). Accordingly, it is possible to display the printer 10 which satisfies the condition, at a relatively higher order in the list.

Then, returning to the process (S402), the terminal apparatus waits for a connection response from another Bluetooth devices.

If there is no response from another Bluetooth device (S402: N), the printer list thus generated is displayed on the display part 6 (S409). This list is to display communication-available printers, so that the user is prompted to input a selection of a printer.

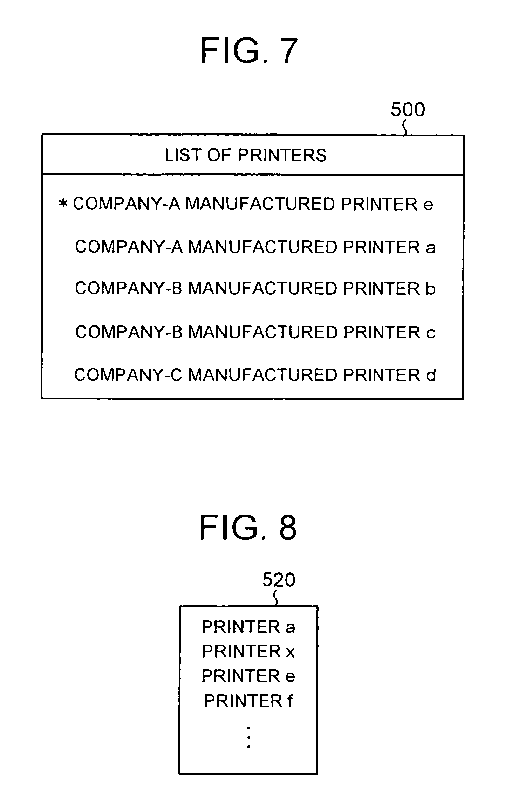

FIG. 7 is an illustration showing an example of the list 500 which is displayed when the condition to be determined in the process (S406) is defined as "the printer is manufactured by company *A*". In the present example, it is assumed a case that the printer control program is developed by the company A, and the design contents thereof are suitable for printing by the printer of company *A*-manufactured.

As shown in the figure, the list 500 displays manufacturer names and model names of the printer 10 which are available for the terminal apparatus 1 to conducts printing. Here, the printers "printer *e"* and "printer *a",* which satisfy the condition that "the printer is manufactured by company *A",* are displayed at higher order, facilitating the selection of those printers by the user. It is matter of course that if the terminal apparatus 1 has a design where the lower side of the list is preferable for the designation, the higher order and the lower order may displayed reversely.

The terminal apparatus 1 accepts from a user a designation of the printer which is used for printing, by use of this list (S410).

Since the list as shown in FIG. 7 determines the condition in order of receiving the connection response, it is not possible to assure the display order among the printers 10 which satisfy the condition. In other words, according to the above algorithm, a printer 10, which is determined as satisfying the condition at a later time, is added in the list at a higher order or at a lower order.

In view of this, it is further possible to decide the display order in the list among the printers 10 which satisfy the condition. This configuration may facilitate a selection of a printer 10 having better compatibility, among the printers 10 which satisfy the condition. In order achieve this, the terminal apparatus 1 is provided with data 520 in advance, one example of which is shown in FIG. 8. For example, this data may be previously included in the printer control program.

In other words, the data 520 is to define the order of priority with respect to each model among the printers 10 which satisfy the condition, in the present example, the printers manufactured by the company *A*. With regard to the printers manufactured by a predetermined manufacturer, it is possible to figure out printer models available on the market. Therefore, the data 520 of this example can be defined.

For the case above, after the terminal apparatus 1 generates a list according to the above algorithm, it sorts the models of the printer names manufactured by the company A which are included in the list, with reference to the data 520. Then, these sorted printer models are displayed on the display part 6.

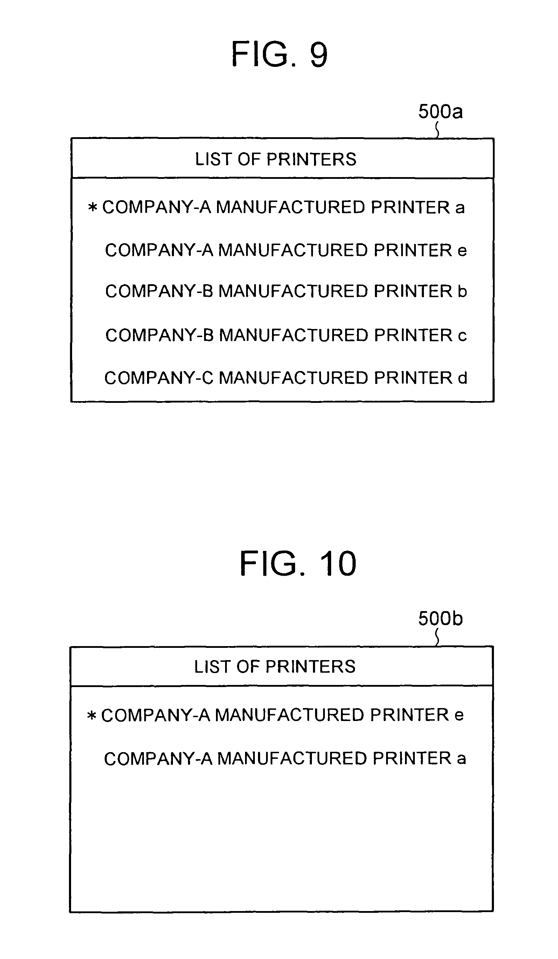

FIG. 9 is an illustration showing an example of the list 500a, which is obtained by modifying the list as shown in FIG. 7 according to the data 520 as shown in FIG. 8. As is shown in this illustration, the printer *a* that is set at the higher order in the data 520 is displayed at an order higher than the printer e, thereby facilitating the designation.

In addition, in the flow diagram as described above, the printers 10 are registered at the higher or lower order in the list, in each stage where a connection response is received from the individual printer 10. Alternatively, after the connection responses from all the printers 10 are received, it is possible to sort the order displayed in the list, considering whether or not the predetermined condition is satisfied.

It is to be noted that a printer 10 which does not satisfy the condition in the process is added at the bottom of the list (S408), but alternatively, it may not be displayed in the list. In this case, as shown in FIG. 10, only the printer *a* and the printer *e*, which satisfy the condition "the printer is manufactured by company *A*", are displayed in the list 500b. Here, whether or not the printer 10 not satisfying the condition is displayed in the list may be determined according to an instruction from the user.

As thus described, according to the present invention, it is possible to enhance the usability in selecting a printer.

## Claims

1. A printing process control method provided in a terminal apparatus comprising a storing means which stores image data to be printed and a control means which performs short distance wireless communication with a printing apparatus, wherein,
said control means obtains from the printing apparatus, information regarding an attribute of the apparatus,
said control means determines whether or not said printing apparatus supports a predetermined expanded specification, based on the information regarding the attribute thus obtained,
when it is determined that the printing apparatus supports said predetermined expanded specification, data obtained by processing said image data to be printed according to said predetermined expanded specification is transmitted to said printing apparatus in a predetermined file format, and when it is determined that said printing apparatus does not support said predetermined expanded specification, data for identifying said image data to be printed is transmitted to said printing apparatus in a predetermined file format.

2. The printing process control method according to claim 1, wherein,
said predetermined expanded specification is MIME (Miltipurpose Internet Mail Extension).

3. The printing process control method according to either of claim 1 and claim 2, wherein,
said predetermined file format is XHTML (Extensible Hypertext Markup Language).

4. The printing process control method according to claim 1, wherein,
said control means obtains information from said printing apparatus, information regarding a function of the printing apparatus, in addition to the information regarding the attribute of said printing apparatus, and displays a print settings accepting screen having been modified based on said information thus obtained regarding the function of the printing apparatus, prior to transmitting data in said predetermined file format to said printing apparatus.

5. A terminal apparatus which performs short distance wireless communication with a printing apparatus, comprising,
a storing means which stores image data to be printed,
an attribute information obtaining means which obtains from the printing apparatus, information regarding an attribute of the apparatus,
a determining means which determines whether or not said printing apparatus supports a predetermined expanded specification, based on said information regarding the attribute and
a transmission control means in which when it is determined that said printing apparatus supports said predetermined expanded specification, data obtained by processing said image data to be printed according to said predetermined expanded specification is transmitted to said printing apparatus in a predetermined file format, and when it is determined that said printing apparatus does not support said predetermined expanded specification, data for identifying said image data to be printed is transmitted to said printing apparatus in a predetermined file format.

6. The short distance wireless communication terminal apparatus according to claim 5, further comprising,
a function information obtaining means which obtains from the printing apparatus, information regarding the function of the apparatus, and
a print settings accepting means which displays a print settings accepting screen having been modified based on said information thus obtained regarding the function of the printing apparatus.

7. A short distance wireless communication printing system provided with a printing apparatus and a terminal apparatus performing short distance wireless communication with said printing apparatus, wherein,
said printing apparatus comprises,
an attribute information responding means which makes a response as to information regarding an attribute of the printing apparatus itself, in response to a request from outside, and
said short distance wireless communication terminal apparatus comprises,
a storing means which stores image data to be printed,
an attribute information obtaining means which obtains from said printing apparatus, information regarding an attribute of the apparatus,
a determining means which determines whether or not said printing apparatus supports a predetermined expanded specification based on said information regarding the attribute,
a transmission control means in which when it is determined that said printing apparatus supports said predetermined expanded specification, data obtained by processing said image data to be printed according to said predetermined expanded specification is transmitted to said printing apparatus in a predetermined file format, and when it is determined that said printing apparatus does not support said predetermined expanded specification, data for identifying said image data to be printed is transmitted to said printing apparatus in a predetermined file format.

8. The short distance wireless communication printing system according to claim 7, wherein,
said printing apparatus further comprises,
a function information responding means which makes a response as to information regarding a function of the printing apparatus itself, in response to a request from the outside, and
and said short distance wireless communication terminal apparatus further comprises,
a function information obtaining means which obtains from said printing apparatus, information regarding the function of the apparatus, and
a print settings accepting means which displays a print settings accepting screen having been modified based on said information thus obtained regarding the function of the printing apparatus.

9. A recording medium which records a program that is executed in a terminal apparatus comprising a storing means which stores image data to be printed and performing short distance wireless communication with a printing apparatus, wherein,
said program allows said terminal apparatus to function as,
an attribute information obtaining means which obtains from the printing apparatus, information regarding an attribute of the apparatus,
a determining means which determines whether or not said printing apparatus supports a predetermined expanded specification based on said information regarding the attribute,
a transmission control means in which when it is determined that said printing apparatus supports said predetermined expanded specification, data obtained by processing said image data to be printed according to said predetermined expanded specification is transmitted to said printing apparatus in a predetermined file format, and when it is determined that said printing apparatus does not support said predetermined expanded specification, data for identifying said image data to be printed is transmitted to said printing apparatus in a predetermined file format.

10. A terminal apparatus which performs short distance wireless communication with printing apparatuses, comprising,
a list displaying means which displays a list of printing apparatuses available for communication, and accepts a selection of the printing apparatus which is used for printing,
a search requesting means which issues a search request for devices,
a printing apparatus extraction means which extracts a printing apparatus from the devices responding to said search request,
a printing apparatus information requesting means which requests information regarding said printing apparatus from said printing apparatus thus extracted,
a determining means which determines whether or not information in response to said printing apparatus information request satisfies a predetermined condition, and
a printing apparatus registering means in which when it is determined said condition is satisfied, information for identifying said printing apparatus is registered in a higher order of the list, and when it is determined said condition is not satisfied, the information for identifying the printing apparatus is registered in a lower order of the list.

11. The terminal apparatus according to claim 10, wherein,
said determining means determines as said predetermined condition, whether or not a manufacturer of said printing apparatus included in the response information to said printing apparatus information request is a predetermined manufacturer.

12. The terminal apparatus according to claim 11, wherein,
said predetermined manufacturer is identical to a developer of a program to control printing process in the terminal apparatus.

13. The terminal apparatus according to claim 11, wherein,
said printing apparatus registering means sorts the order in the list as to the information which identifies a printing apparatus determined as satisfying the predetermined condition, based on a predetermined order of priority, after the printing apparatus is registered into a list of communication available printing apparatus.

14. The terminal apparatus according to claim 13, wherein,
said predetermined order of priority is a order given to each model.

15. The terminal apparatus according to claim 10, wherein,
information for identifying a printing apparatus which said printing apparatus registering means registers in said list is a manufacturer name of said printing apparatus and a model name of said printing apparatus, which are included in the response information to said printing apparatus information request.

16. A terminal apparatus which performs short distance wireless communication with printing apparatuses, comprising,
a list displaying means which displays a list of printing apparatuses and accepts a selection of a printing apparatus to be used for printing,
a search requesting means which issues a search request for devices,
a printing apparatus extracting means which extracts a printing apparatus from the devices which respond to said search request,
a printing apparatus information requesting means which requests information regarding said
printing apparatus from thus extracted printing apparatus,
a determining means which determines whether or not the response information to said printing apparatus information request satisfies a predetermined condition, and
a printing apparatus registering means which registers into a list, information for identifying the printing apparatus, when it is determined that the printing apparatus satisfies said condition.

17. A recording medium which records a print control program executed in a terminal apparatus that performs short distance wireless communication with printing apparatuses, wherein,
said print control program allows the terminal apparatus to function as
a list displaying means which displays a list of printing apparatuses available for communication, and accepts a selection of the printing apparatus which is used for printing,
a determining means which determines whether or not information regarding said printing apparatus obtained from a communication available printing apparatus satisfies a predetermined condition, and
a printing apparatus registering means in which when it is determined said condition is satisfied, information for identifying said printing apparatus is registered in a higher order of the list, and when it is determined said condition is not satisfied, the information for identifying the printing apparatus is registered in a lower order of the list.

18. A list displaying control method in a terminal apparatus which performs short distance wireless communication with printing apparatuses, said list displaying control method displaying a list of communication available printing apparatuses and accepts a selection of the printing apparatus used for printing, comprising,
a search requesting step which issues a search request for devices,
a printing apparatus extracting step which extracts a printing apparatus from devices which have responded to said search request,
a printing apparatus information requesting step which requests information regarding said printing apparatus from said printing apparatus thus extracted,
a determining step which determines whether or not information in response to said printing apparatus information request satisfies a predetermined condition, and
a printing apparatus registering step in which when it is determined said condition is satisfied, information for identifying said printing apparatus is registered in a higher order of the list, and when it is determined said condition is not satisfied, the information for identifying the printing apparatus is registered in a lower order of the list.
